# EUROPEAN PATENT SPECIFICATION

(11) **EP 3 218 237 B1**
(45) Date of publication and mention of the grant of the patent: **18.04.2018**
(21) Application number: 15813613.5
(22) Date of filing: 13.11.2015
(51) Int. Cl.: B61L 25/02, B61L 27/00, E01B 19/00, B60S 3/00, B61K 13/00

(54) **DEVICE FOR AUTOMATIC DISPENSING OF AN ANTI-ICING AGENT OR A DE-ICING AGENT ON RAILWAY VEHICLES**
VORRICHTUNG ZUR AUTOMATISCHEN AUSGABE EINES FROSTSCHUTZ- ODER ENTEISUNGSMITTELS AUF SCHIENENFAHRZEUGEN
DISPOSITIF DE DISTRIBUTION AUTOMATIQUE D'UN AGENT D'ANTIGIVRAGE OU D'UN AGENT DE DÉGIVRAGE SUR DES VÉHICULES DE CHEMIN DE FER

(30) Priority: 14.11.2014 SE 1451367
(43) Date of publication of application: 20.09.2017
(73) Proprietor: Solliq AB, 211 24 Malmö (SE)
(72) Inventor: MICHELSEN, Clive, 23931 Skanör (SE)
(74) Representative: Persson, Albin
(86) International application number: PCT/SE2015/051216
(87) International publication number: WO 2016/076789

(56) References cited:
- WO-A1-2013/043090
- WO-A1-2014/182226
- US-B1- 6 585 085

## Description

### Field of the invention

The present invention relates to a dispensing device and a corresponding method. More specifically, the present invention relates to a device for automatic dispensing of a maintenance agent, such as an anti-icing agent or a de-icing agent, on at least a part of a rolling stock, such as a locomotive or a carriage.

### Background art

From document US 6 585 085 B1 a device according to the preamble of claim 1 is known.

In order to remove ice and snow from a train, an automatic anti-icing and de-icing system may be utilized. Typically, this anti-icing and de-icing operation has to be performed when the train is being operated on a railway track. In operation, the train slows down or stops in front of the anti-icing and de-icing system. Thereafter, a liquid, such as glycol, is sprayed on a selected part of the train by using a spraying arrangement. The liquid is supplied from a storage container and may be heated before the spraying operation.

However, known anti-icing systems have to be operated when the trains are standing still, are sidelined, i.e. moved off to a low priority track, or when they are moving at a very low speed, typically below 5 km/h. As a result, it may take a considerable time to perform an anti-ice and de-icing treatment on the trains. Additionally, there is need for an anti-icing and de-icing system which is controlled more easily and that can be used on mainlines, thereby also reducing a downtime of the train.

### Summary of the invention

It is therefore an object of the present inventive concept to provide an improved dispensing device for dispensing a maintenance agent which is more efficient.

It is also an object of the present inventive concept to provide a related dispensing method.

According to the invention, which is defined by the features of the independent claims, there is provided a device according to claim 1 for automatic dispensing of a maintenance agent, such as an anti-icing agent or a de-icing agent, on specific parts of a rolling stock, such as a locomotive or a carriage. The device comprises: a dispensing unit adapted to dispense said maintenance agent on said specific parts of the rolling stock, a detection unit configured to generate a detection signal before the rolling stock reaches the dispensing unit, a sensor unit configured to determine a position of a part of the rolling stock and generate a position signal, and for determining a velocity of the rolling stock, and a control unit. The control unit is configured to receive the detection signal from the detection unit and the position signal from the sensor unit, determine a dispensing schedule based on said rolling-stock velocity, said dispensing schedule comprising a time schedule having data about when to dispense the maintenance agent from the dispensing unit and information about a time duration of how long to dispense the maintenance agent from the dispensing unit, and transmit a control signal to the dispensing unit, wherein the control signal is configured to control said dispensing unit based on said dispensing schedule. By the structure of the device it is possible to achieve very precise dispensing on specific parts of the rolling stock, generally at any rolling stock velocity. Hence, precise dispensing can be achieved at very low velocity as well as very high velocity of the the rolling stock. Further, dispensing operations can be performed on rolling stock travelling on mainline railway tracks, e.g. without reducing their original speed.

Here and in the following, the device for automatic dispensing is sometimes referred to as a dispensing device.

By rolling stock is here meant a railway vehicle which may be transported or moved on a railway track. Examples of a rolling stock include a locomotive, a carriage, a railroad car, a train, a part of a train, a passenger car, a coach, a goods wagon, a freight car, etc. The rolling stock may transport cargo, passengers, etc. The rolling stock may comprise one or several train units. Typically, there are three types of rolling stock: one type with only exchangable train units, one type with fixed train units which are not exchangable, and one type with exchangable and fixed train units.

The term maintenance agent may be an anti-icing agent, a de-icing agent, or any other agent which may reduce or prevent snow and/or ice from forming. The maintenance agent is preferably in liquid form. Alternatively, however, the maintenance agent may be in gaseous form. For example, the maintenance agent may be glycerine or glycol. For example, the maintenance agent is a single use environmentally friendly maintenance agent, which does not have to be recycled or collected. For example, the maintenance agent is biodegradable or biocompatible.

A dispensing of the maintenance agent may be a spraying of the maintenance agent.

The maintenance agent may be heated before dispensing it on the rolling stock. In non-limiting examples, an operating temperature, i.e. a dispensing or spraying temperature, of the maintenance agent may be between 10°C and 40°C or, more preferably, between 10°C and 30°C, such as around 20°C.

The maintenance agent may be dispensed at outdoor temperatures below 0°C. The inventive device may operate, i.e. dispense the maintenance agent, at outdoor temperatures between -70°C and 70°C. If the outdoor temperature is below a certain critical outdoor temperature, the maintenance agent is preferably heated. In a non-limiting example, the critical outdoor temperature is between - 70°C and -20°C.

The inventive device is adapted to dispense the maintenance agent on specific parts of a rolling stock. More specifically, the dispensing unit may dispense the maintenance agent on selective parts of the rolling stock, such as a part or the whole of: an underside of the rolling stock, a bogie of the rolling stock, an entrance step of the rolling stock, brakes of the rolling stock, etc. Valves to the dispensing unit can be opened and closed according to the dispensing schedule, wherein dispensing only takes place on the specific parts and the dispensing unit is shut off in between the specific parts. For example, spraying can be turned on and off according to the dispensing schedule.

The detection unit may comprise one or several parts. The detection unit is configured to generate at least one detection signal. By detection signal is here meant a signal which is generated in response to the rolling stock being detected by the detection unit, such as before reaching the dispensing unit or entering a dispensing area. The dispensing area is the area in which maintenance agent is dispensed on the rolling stock. The detection signal may be sent to the control unit by means of a wire or, more preferably, by means of wireless communication.

The detection unit may be configured to be activated before the rolling stock enters the dispensing area. The detection unit can be arranged 50-100 m before the dispensing unit along the railway track.

The dispensing area is an area or a region in which the dispensing unit is located. Moreover, the dispensing area may comprise an area comprising a railway track portion on which the rolling stock is adapted to be moved.

The control unit may be separated from the dispensing unit. Alternatively, the control unit may be comprised in the dispensing unit. The control unit may be separated from the detection unit, such as the antenna unit. Alternatively, the control unit may be comprised in the antenna unit.

Here and in the following, an act of determining may be an act of calculating, comparing, measuring, estimating, predicting, etc.

Different rolling-stock parameters can be determined. The rolling-stock parameter may be a physical parameter such as a velocity of the rolling stock, a speed of the rolling stock, a position of the rolling stock, an actual time of arrival of the rolling stock, an expected or estimated time of arrival of the rolling stock, an estimated or expected acceleration of the rolling stock, an estimated or expected deceleration of the rolling stock, etc. By speed is here and in the following meant a modulus, or magnitude, of the velocity. However, the words velocity or speed may be used interchangable here and in the following. The rolling-stock parameter may also be a parameter which identifies the rolling stock, a parameter which confirms that it is acceptable or unacceptable to dispense the maintenance agent on the rolling stock by means of the dispensing unit, etc.

The control signal may be transmitted to the dispensing unit by means of a wire, or alternatively, by means of wireless communication.

The rolling stock has two sides: a first side and a second side. In the direction of motion, there is a left side and a right side of the rolling stock which may correspond to the first and the second side of the rolling stock, respectively. The dispensing unit is adapted to dispense the maintenance agent at least on a first side of the rolling stock. The dispensing unit may be adapted to dispense the maintenance agent on the first and the second side of the rolling stock, simultaneously or in sequence. The dispensing unit may be adapted to dispense the maintenance agent in any direction. For instance, a nozzle of the dispensing unit may be rotated and/or inclined for achieving the dispensing in any direction.

The dispensing schedule may comprise a time schedule. The time schedule may comprise information and data about when to dispense the maintenance agent from the dispensing unit. The time schedule may comprise information about how long to dispense the maintenance agent from the dispensing unit, i.e. information about a time duration or a time period. The dispensing schedule may also comprise an operational schedule. The operational schedule may comprise a schedule for how and/or where to dispense the maintenance agent. For example, the operational schedule may comprise information about which valve or valves to open, which valve or valves to close, by which pressure the maintenance agent should be exerted from the dispensing unit, by which speed or velocity the maintenance agent should be exerted, which spray pattern of the maintenance agent to use for a specific valve or specific valves, which particular maintenance agent out of a plurality of maintenance agent to supply to the dispensing unit, etc.

Optionally, the dispensing unit may be controlled based on the dispensing schedule, also taking into account at least one external parameter. The external parameter may be a limiting external parameter, e.g. due to a physical limitation. The external parameter may be maximal pressure of the maintenance agent at an output portion of the dispensing unit, such as a nozzle, a maximal delivery speed or delivery velocity of the maintenance agent at an output portion of the dispensing unit, a parameter relating to prevailing weather conditions such as an outdoor temperature, atmospheric humidity, atmospheric pressure, wind speed, etc. Additionally, or alternatively, the external parameter may relate to a previous dispensing operation of the dispensing device. By way of example, the external parameters may be provided to the control unit or to the dispensing unit from a database storing external parameters. The database may be comprised in a server. The external parameters may be retrieved from the database. The server may be connected to the detection unit, control unit or the dispensing unit by means of a wire or by means of wireless communication. Alternatively, the server may be accessed by means of a computer device, such as a stationary computer or a portable computer device, such as a, laptop, a smart phone or an ipad. The computer device may be connected to the server by means of a wire or by means of wireless communication.

The external parameter may be retrieved by the computer device, the control unit, the detection unit, or the dispensing unit for controlling the dispensing schedule.

The dispensing unit may comprise at least one dispensing member. The dispensing member may be an arm-shaped dispensing member. The dispensing member may comprise at least one dispensing nozzle, or nozzle for short. For example, there may be pair of nozzles provided at each dispensing member. The maintenance agent may exit through the nozzle. In another example, there is a plurality of nozzles provided at each dispensing member. The dispensing nozzle may be arranged to dispense the maintenance agent according to the dispensing schedule. One dispensing nozzle at a time out of the plurality of dispensing nozzles may dispense the maintenance agent. Alternatively, several dispensing nozzles out of the plurality of dispensing nozzles may dispense the maintenance agent simultaneously. Optionally, all of the plurality of dispensing nozzles may dispense the maintenance agent simultaneously.

The dispensing patterns, or spray patterns, of the nozzles in the dispensing member may be different. More specifically, a first nozzle may give rise to a first dispensing pattern while a second nozzle may give rise to a second dispensing pattern, etc. A shape of the different nozzles may be different. For example, a shape of a nozzle may be in the form of an oval, a circle, a square, a rectangle, a star, etc.

For example, a first nozzle provided on a dispensing member may be provided with an opening extending in a vertical direction with respect to a moving direction of the rolling stock, and a second nozzle provided on the same dispensing member may be provided with an opening extending in a horizontal direction with respect to a moving direction of the rolling stock. Other relative inclinations of the first and the second nozzles are equally conceivable.

According to one embodiment, the nozzles may be adjusted individually. Each nozzle may be rotated and/or inclined. For example, each nozzle may be inclined with respect to a horizontal plane extending along the railway track. Due to this flexibility of the nozzles, the maintenance agent may be dispensed from any direction to parts of the rolling stock and to any selective area of the rolling stock.

In accordance with the inventive concept, there is provided an improved dispensing device for dispensing a maintenance agent which is more efficient. Indeed, by means of the control unit, which is configured to transmit a control signal to the dispensing unit according to the inventive concept, the dispensing unit comprised in the dispensing device may operate in an improved and a more efficient manner.

In particular, the automatic dispensing device may be controlled in a faster and more efficient manner. The detection unit allows for a fast generation of a detection signal, which may be further processed by the control unit in accordance with the inventive concept. In a non-limiting example, a reaction time of the detection unit may be on a time scale of milliseconds. The detection unit, the control unit and the dispensing unit comprised in the dispensing device allows for a fast communication by means of electronic signals. Thus, by means of the inventive dispensing device, the rolling stock may be subject to dispensing of the maintenance agent while in motion. In fact, the inventive device may operate, in particular dispense the maintenance agent, at a speed of the rolling stock which may be substantially higher as compared to the dispensing devices known in the prior art. In a non-limiting example, the inventive device may operate when the speed of the rolling stock on the railway track is between 1 and 100 km/h, or even faster according to some embodiments. For example, a rolling stock can be provided with maintenance agent while travelling at normal speed on a mainline railway track, i.e. during normal operation of the rolling stock. In view of the above, a downtime of the train is also reduced.

Additionally, the inventive concept allows for a flexible control and adjustment of the dispensing device as will be described in more detail below. In particular, the dispensing schedule may be further adapted by taking into consideration external parameters.

According to one embodiment, the detection unit comprises an antenna unit comprising at least one antenna, and an electronic tracking unit which is adapted to be arranged on or in the rolling stock, the electronic tracking unit being arranged to communicate with the antenna unit. The electronic tracking unit is preferably arranged on the rolling stock so as to allow for communication with the antenna unit. Alternatively, however, the electronic tracking unit may be arranged in or nearby the dispensing area. The communication may comprise transmitting and receiving signals. The antenna unit may comprise a plurality of antennas. In a first example, the antennas are located at the same location. In a second example, the antennas are located at different locations. The electronic tracking unit may provide detection of a rolling stock and can also be arranged for providing identification of the rolling stock. It can also provide data for tracking the rolling stock and may assist in determining at least one of a position, a speed, and an acceleration or deceleration of the rolling stock. The antenna may be an RFID antenna. Additional antennas in the antenna unit may increase the communication quality between the antenna unit and units in the dispensing device, e.g. between the antenna unit and the electronic tracking unit or between the antenna unit and the control unit. For example, a readability of the electronic tracking unit may be improved. At least one of the antenna unit and the electronic tracking unit may be used for generating the detection signal and an identification signal. In a first example, the electronic tracking unit sends the generated detection signal to the control unit. In a second example, the antenna unit sends the generated detection signal to the control unit. The detection and identification signal from the detection unit to the control unit can be signals amplified by conventional signal amplifying means for a reliable signal over a considerable distance, such as 50-100 m or even more.

The antenna unit may receive a signal from the electronic tracking unit. The signal may be time stamped. The signal may be time stamped once it is received by the antenna unit. The signal may be communicated to the control unit. At the control unit, additional actions which are based on the time-stamped signal may be performed.

The electronic tracking unit may comprise one or several radio transponders. Preferably, the electronic tracking unit comprises one or several tags, such as RFID tags. For example a first electronic tracking unit is arranged at a first end of a rolling stock, wherein a second electronic tracking unit is arranged at an opposite second end of the rolling stock.

There may be a first and a second antenna unit provided in the dispensing device. The first antenna unit may be operative when the rolling stock is moving in a first direction along the railway track, e.g. from the right to the left. The second antenna unit may be operative when the rolling stock is moving in an opposite second direction, e.g. from the left to the right.

According to an alternative embodiment, the detection unit comprises at least one communication device and an electronic tracking unit. The electronic tracking unit may be arranged on or in the rolling stock. The communication device may comprise at least one communication unit. The communication unit may be a transceiver, a receiver or a transmitter. The communication device may communicate with the electronic tracking unit.

According to one embodiment, the electronic tracking unit comprises at least one a radio frequency identification tag, RFID tag. For example, a locomotive may have at least one RFID tag. Additionally, a plurality of RFID tags may be distributed on several carriages.

According to one embodiment the RFID tags are used for detection and identification of a rolling stock before entering the dispensing area. The RFID tags can also be used to detect when a rolling stock has left the dispensing area. However, according to another embodiment the RFID tags are used to determine a rolling stock parameter. In order to determine the rolling-stock parameter, such as the velocity or the speed of the rolling stock, the distances between the RFID tags are preferably known.

In one example, the velocity of the rolling stock is determined by means of at least two RFID tags. For example, time stamping may be used together with knowledge about distances between these at least two tags. In this example, at least one antenna is needed for determining the velocity. For a rolling stock with fixed train units, as explained above, one RFID tag is needed at either end of the rolling stock. Clearly, additional RFID tags may be provided on the rolling stock. These additional RFID tags may provide additional position indicators, speed indicators, acceleration indicators, and deceleration indicators. For example, these indicators may be provided by means of time stamping. In addition, they may be used for maintenance purposes. For example, the RFID tags may provide a database for specifics relating to specific parts of the rolling stock, such as individual bogies or a side part. The specifics may comprise historic data about previous dispensing operations, etc.

According to one aspect of the invention rolling stock velocity is determined by the sensor unit. In another example, the velocity of the rolling stock is determined by means of at least one RFID tag. For example, time stamping together with knowledge about distances between these at least two antennas are known. In this example, at least two antennas are needed for determining the velocity.

It is noted that when multiple exchangeable train units are used, the lengths of these train units may change. Preferably, there is at least one RFID tag provided on each exchangeable rolling stock. These additional RFID tags may provide more consistent dispensing operations by taking into account the varying train unit types and varying distances of the train units. For example, the train units may be changed between peak- and non-peak hours.

The RFID tag may be a passive RFID tag. The passive RFID tag may be arranged to be energized by at least one antenna comprised in the antenna unit.

The RFID tag may be an active RFID tag. Thus, the active RFID tag may comprise a local energy source, e.g. a battery.

The RFID tag may be a semi-passive RFID tag.

According to a first example, the RFID tag is located in a region of the rolling stock which is intended to be dispensed with the maintenance agent.

According to a second example, the RFID tag is located separate from the region of the rolling stock which is intended to be dispensed with the maintenance agent.

The RFID tag may be a read-only tag. In this case, the tag may only be read and no new data may be written into the tag.

Alternatively, the RFID tag may be a read/write tag. In this case, the tag may be read and/or new data may be written into the tag.

An RFID may be locked, so that it cannot be rewritten.

The antenna unit may be arranged to read at least one RFID tag.

The antenna unit may be arranged to write one or several new RFID tags, provided that the tags are not locked. For example, the writing may occur when the rolling stock passes by the dispensing device.

When a plurality of RFID tags are used, the time stamping mentioned above may provide the rolling-stock parameter, such as a speed of the rolling stock, on a regular basis, continuously or discretely in time. Thereby, an acceleration of the rolling stock may be determined, i.e. whether the rolling stock has a constant speed, an increasing speed or a decreasing speed. Also, a position on the rolling stock may thereby be determined, and reliable dispensing points may be determined as the rolling stock passes the various dispensing arms, or dispensing nozzles, which are placed at specific distances from the antenna unit.

According to one embodiment, at least one detection signal and the control signal is a wireless signal. Thereby, the mounting of the dispensing device may become more flexible since no wires, or at least fewer wires, need to be installed.

According to one embodiment, the control signal is further configured to control at least one of a dispensing duration, a pump speed of the dispensing unit, and a dispensing coverage of the dispensing unit based on the rolling-stock parameter. An advantage of this embodiment is that the control signal may be used for adapting the dispensing operation in an improved manner. For example, an amount of the maintenance agent dispensed from the dispensing unit may be controlled, a pressure of the maintenance agent dispensed from the dispensing unit may be controlled, a speed of the maintenance agent dispensed from the dispensing unit may be controlled, a dispensing pattern of the maintenance agent dispensed from the dispensing unit may be controlled, etc. The dispensing coverage may be controlled by adjusting a dispensing nozzle out of which the maintenance agent is dispensed.

According to one embodiment, the position and velocity of the rolling stock is determined by the sensor unit. From the determined position and velocity the control unit may estimate or predict when the rolling stock will reach the dispensing unit, i.e. a time of arrival of the rolling stock. More specifically, the control unit may estimate or predict when specific parts of the rolling stock will align or be located in front of the various dispensing nozzles which are comprised in the dispensing unit.

Clearly, the control unit or dispensing unit may have to compensate for a distance between the dispensing nozzle and the part of the rolling stock which is to be dispensed. For example, if an average speed of the maintenance agent which is to be dispensed is given by v_{disp}, and the distance between the nozzle and the part of the rolling stock which is to be dispensed is given by ΔD, the dispensing operation has to be started at time Δt= ΔD/v_{disp} before an estimated arrival of the rolling stock in front of the nozzle.
According to one embodiment, the velocity is determined by the sensor unit being a position and velocity sensor unit. According to one embodiment, the velocity is determined by utilizing electronic time stamping, based on signal and data receipt, or Doppler shift. According to one embodiment, the sensor unit comprises at least one sensor. The sensor may be a magnetic sensor, an optical sensor, a laser sensor or a motion sensor, but other choices known to a person skilled in the art are conceivable. The magnetic sensor may be arranged on, or in proximity to, the railway rail. The magnetic sensor may be adapted to generate and transmit a signal to the control unit when a wheel of the rolling stock is passing by the magnetic sensor. More specifically, the magnetic sensor may be activated when a flange of the wheel is in magnetic communication with the magnetic sensor. Alternatively, the magnetic sensor may be activated by the presence of an axel of the rolling stock near the magnetic sensor. For example, the sensor unit may compromise two sensors, such as two magnetic sensors. According to a first non-limiting example, the sensor unit comprises two magnetic sensors, wherein the distance ΔD_{M1} between the magnetic sensors is known. The sensor unit is arranged to provide a first time stamp t₁ when a first wheel flange of the rolling stock is passing by a first magnetic sensor and to provide a second time stamp t₂ when the first wheel flange is passing by a second magnetic sensor. The sensor unit is arranged to calculate the velocity of the rolling stock by means of the formula v_{M1}=ΔD_{M1}/(t₁-t₂). v_{M1}. If the velocity is calculated by means of the detection signal the velocity calculated by the sensor unit may be compared with the velocity v_{det} as calculated by means of the detection signal.

According to a second non-limiting example, the sensor unit comprises one magnetic sensor. The sensor unit is then arranged to provide a first time stamp T₁ when a first wheel flange of the rolling stock is passing by the magnetic sensor and to provide a second time stamp T₂ when a second wheel flange of the rolling stock is passing by the magnetic sensor. The distance Δd_{M2} between the first and the second wheel flange is known, e.g. by identification of the rolling stock by means of the detection unit. In this case, the sensor unit is arranged to calculate the velocity of the rolling stock by means of the formula v_{M2}=ΔD_{M2}/(T₁-T₂). v_{M2}.

Other ways of calculating the velocity v_{M} are conceivable.

Accurate measures of a rolling-stock parameter, such as a speed of the rolling stock, may take into account readings from multiple wheel flanges, or axels. Thus, the sensor unit may generate rolling-stock parameters, such as a velocity, at regular intervals or continuously. As a consequence, the rolling-stock parameters, such as the velocity, may be adjusted, updated and compared, at regular intervals or continuously.

Alternatively, or additionally, the sensor unit may be configured to determine a position of the rolling stock, or specific parts of the rolling stock, such as a wheel flange, a door, etc.

The sensor unit may be used to determine or confirm a speed of the rolling stock. For example, the sensor unit may be used to confirm that the speed is within an acceptable error range. Additionally, the sensor unit may be used to determine or confirm an acceleration of the rolling stock, i.e. whether the speed is increasing, decreasing and constant.

According to one embodiment, at least one of the detection units and the control unit is further configured to generate at least one identification signal and a confirmation signal, wherein at least one of the detection units and the control unit is configured to receive the at least one identification signal and a confirmation signal, and determine whether to send the control signal based on at least one of the identification signal and the confirmation signal. By means of this embodiment, the dispensing device may start the dispensing operation on a condition that a correct identification of the rolling stock has been established, and/or on a condition that a confirmation associated to the rolling stock has been established. The confirmation may be provided by means of an external schedule, e.g. by retrieving confirmation data from a database, may be provided manually by a person associated with the rolling stock, such as a driver, etc. The confirmation data in the database may comprise historical data related to previous dispensing operations of the rolling stock.

The dispensing device can comprise a pump and a connection arrangement, such as connection conduits including pipes, hoses and valves, connected to a reservoir for the maintenance agent. The pump is connected to the dispensing unit through the connection arrangement. The control unit is connected to control operation of the pump to control the dispensing operation. The control unit can be configured to start a pump connected to the dispensing unit upon receipt of the detection signal from the detection unit and before transmitting the control signal to the dispensing unit. Hence, the pump is activated before dispensing operation is initiated, such as seconds before the dispensing operation is initiated, wherein the dispensing device is ready for immediate dispensing operation on a fast travelling rolling stock when the rolling stock reaches the dispensing unit. The dispensing device can comprise a recirculation line and a recirculation valve connected to the control unit and the pump, wherein maintenance agent can be pumped around in the recirculation line by means of the pump without starting dispensing operation. The control unit can be configured to open the recirculation valve for recirculating maintenance agent by means of the pump upon receipt of the detection signal. The control unit can be further configured to close the recirculation valve before transmitting the control signal to the dispensing unit. Hence, a very high pressure can be built up in the connection arrangement and the dispensing unit before dispensing operation is initiated, which results in the possibility of performing dispensing operations on rolling stock moving in very high speed. The dispensing unit can comprise non-return valves, e.g. a non-return valve at each dispensing member or each nozzle, to keep the maintenance agent and pressure in the connection arrangement and dispensing unit for immediate dispensing.

The dispensing unit can be arranged directly at a railway track, such as an ordinary railway track or a mainline railway track, having rails supported by sleepers. The dispensing unit can be mounted on or adjacent to the sleepers by a fastening device for an easy and cost efficient installation. The dispensing unit can comprise one or a plurality of dispensing members. The dispensing member can comprise a transversely extending portion and a dispensing arm, the dispensing arm being connectable to the transversely extending portion, wherein the transversely extending portion extends under the railway track along a railway sleeper and is fastened to the railway sleeper by means of a fastening device, and wherein the dispensing arm extends in a direction upwards substantially perpendicular to the transversely extending portion. Hence, the transversely extending portion can be inserted under the rails and positioned along a sleeper until it extends under both rails, wherein the dispensing arm can be attached to the transversely extending portion. Hence, an easy and cost efficient installation is achieved. The installation according to the present invention can be made without any devices or installations for collecting used maintenance agent, which result in a cost efficient dispensing device which is easy to install.

According to the invention, there is provided a method according to claim 11 for automatic dispensing of a maintenance agent, such as an anti-icing agent or a de-icing agent, on specific parts of a rolling stock, such as a locomotive or a carriage travelling on a railway track. The method comprises: generating a detection signal before said rolling stock reaches a dispensing unit for dispensing the maintenance agent, determining a position and a velocity of the rolling-stock by means of a sensor unit, forwarding the detection signal to a control unit and determining a dispensing schedule based on said rolling-stock velocity, said dispensing schedule comprising a time schedule having data about when to dispense the maintenance agent from the dispensing unit and information about a time duration of how long to dispense the maintenance agent from the dispensing unit, and dispensing said maintenance agent based on said dispensing schedule.

The details and advantages of the claimed method are largely analogous to those of the claimed device wherein reference is made to the above.

It is noted that the steps of the method does not have to be performed in the exact order disclosed above.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

### Brief Description of the Drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a schematic perspective/side view of a railway environment in which an embodiment of the inventive dispensing device is implemented.
Fig. 2 is a schematic top view of the railway environment in Fig. 1, wherein the dispening unit, the antennas unit(s) and the sensor unit are shown.
Fig. 3 is a perspective view schematically illustrating a pair of dispensing arms which are comprised in the embodiment in Fig. 1. Fig. 4 is a block diagram schematically illustrating an embodiment of the inventive method which is implemented in the dispensing device according to Figs. 1-3.
Fig. 4 is block diagram of an embodiment of a method in accordance with the inventive concept.
Fig. 5 is a schematic top view of the train in Figs. 1 and 2, wherein placements of RFID tags on both sides of the train are illustrated.
Fig. 6 is block diagram of an alternative embodiment of a method in accordance with the inventive concept.

### Detailed Description of Preferred Embodiments

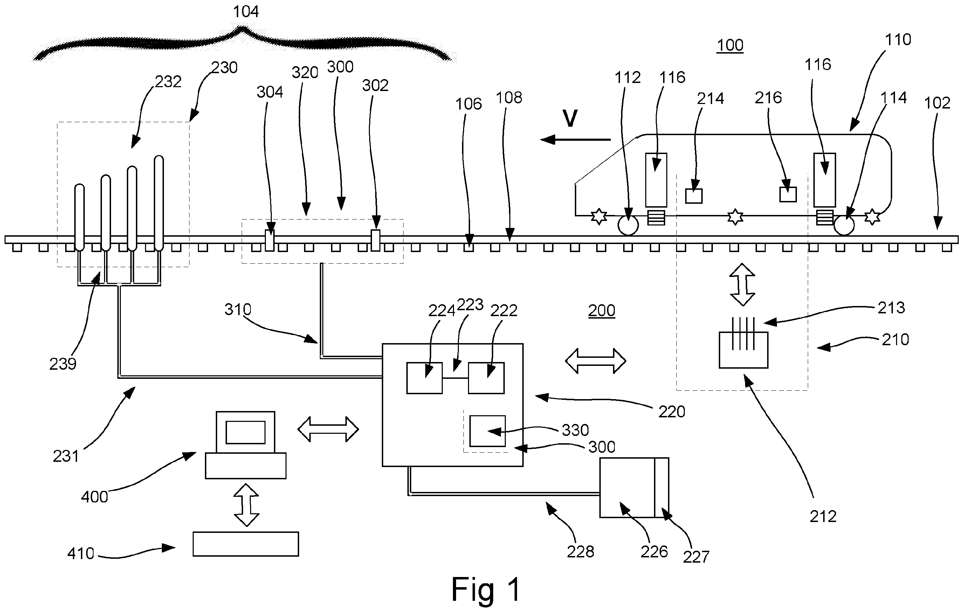

Next, an embodiment of the inventive dispensing device will be described with reference to Fig. 1-3.

Fig. 1 schematically illustrates a side view of a railway environment 100 in which an embodiment of the inventive dispensing device 200, illustrated in a perspective view, is implemented. The railway environment 100 comprises a railway track 102 and a dispensing area 104. The dispensing area 104 comprises a railway track portion on which a rolling stock in the form of a train 110, or a locomotive 110, is adapted to be moved before being subject to a dispensing operation by the dispensing device 200. Additionally, the dispensing area comprises a railway track portion on which the train is adapted to be moved after being subject to the dispensing operation by the dispensing device 200.

The train 110 is moving on the railway track 102 in the direction indicated by the arrow and having a speed v. It is understood that any number of additional train units, such as train wagons, may be connected to the train 110. In Fig. 1, the train 110 is approaching the dispensing device 200. The environment in which the train 110 is moving is very cold, say between -5°C and -30°C, and large quantities of ice and snow is present on the train 110, as indicated by the stars on the train 110. The accumulation of ice and snow is prevented by the dispensing device 200 using an anti-ice maintenance agent. Additionally, the dispensing device 200 may supply a maintenance agent to the train 110 for counteracting the formation of ice and snow after the train 110 has passed by a dispensing area 104 in which the dispensing device 200 is located. Specific parts of the train 110 are intended to be sprayed or dispensed by the dispensing device 200 using the maintenance agent as will be explained in detail below.

The maintenance agent is given by an anti-icing agent or a de-icing agent, or a combination of the two agents, in liquid form. For example, the maintenance agent may comprise glycerine or glycerol. The maintenance agent may also comprise water. For example, water may be mixed with antifreezing agents. However, other maintenance agents are conceivable. For example, glycol may be used. If glycol is used, a collecting unit (not shown) for collecting and reusing or recycling the glycol is preferably used.

The dispensing device 200 comprises a detection unit 210, which is indicated by a broken line, a control unit 220, and a dispensing unit 230, which also is indicated by a broken line. There is a wireless two-way communication between the detection unit 210 and the control unit 220. Additionally, there is a wireless two-way communication between the detection unit 210 and the dispensing unit 230.

In the illustrated embodiment, the detection unit 210 comprises an antenna unit 212, and two passive RFID tags 214, 216. It is clear that two passive RFID tags 214, 216 has been chosen for illustrative purposes only and that any number and any types of RFID tags may be used. The antenna unit 212 comprises four antennas 213 and a power source (not shown). There is a wireless two-way communication between the antenna unit 212 and each of the RFID tags 214, 216. A wireless two-way communication is indicated by a double-sided arrow.

The control unit 220 comprises an electrical unit 222 comprising electronic components for implementing wireless two-way communication with the antenna unit 212 and for receiving wireless detection signals from the RFID tags 214, 216. The control unit 220 unit further comprises a computer unit 224. The computer unit 224 is connected to the electrical unit 222 by means of a cable 223. The computer unit 224 comprises a processor, a database comprising a memory, a telecommunications module, and other components known to a person skilled in the art. The processor is adapted to perform calculations, comparisons, estimates, etc., e.g. based on the received detection signals from the RFID tags 214, 216. The memory in the database may store historic data related to the dispensing device 200. For example, the historic data may be data about previous dispensing operations. These dispensing operations may have been implemented by means of the dispensing device 200, or by other dispensing devices located in other dispensing areas. The historic data may comprise data relating to a dispensing frequency, a dispensing duration, historic dispensing schedules, dispensing pressures, dispensing speeds, geographic dispensing locations, dispensing areas, dispensing areas on the train, a historic speed of the train, a historic position of the train, a historic acceleration of the train, etc.

Moreover, a reservoir 226 for supplying the maintenance agent to the dispensing unit 230 is connected to the control unit 220 by means of a connection hose 228. A heating device 227 is provided next to the reservoir 226 for heating the maintenance agent to an acceptable temperature, e.g. by taking into account an outside temperature. In a non-limiting example, the maintenance agent is heated to a temperature between 20°C and 30°C. In another non-limiting example, the maintenance agent is heated to a temperature between -20°C and 20°C. The connection hose 228 may comprise a heating cable for counteracting a decrease of temperature of the maintenance agent when the railway environment 100 in which the dispensing device 200 is provided has a low temperature, e.g. below -10°C.

It is clear that the detection unit 210 and the control unit 220 may be located inside or outside the dispensing area 104. In the present embodiment, the detection unit 210 is located outside the dispensing area 104 and the control unit 220 is located inside the dispensing area 104. The dispensing unit 230 is located inside the dispensing area 104.

The control unit 220 further comprises a pump (not shown) for feeding the maintenance agent from the reservoir 226 to the dispensing unit 230. The control unit 220 may control the pump.

The dispensing unit 230 is connected to the control unit 220 by means of a connection arrangement 231. The connection arrangement 231 comprises one or several hoses (not shown) for supplying the maintenance agent to the dispensing unit 230. At the dispensing unit 230, the connection arrangement 231 is split into four connection hoses 239.

The connection arrangement 231 may comprise a heating cable for counteracting a decrease of temperature of the maintenance agent when the railway environment 100 in which the dispensing device 200 is provided has a low temperature, e.g. below -10°C.

The connection arrangement 231 also comprises at least one electrical wire for connecting the control unit 220 with the dispensing unit 230. Alternatively, however, the control unit 220 may be connected to the dispensing unit 230 by means of a wireless connection.

Optionally, the connection arrangement 231 may comprise a return hose for circulating back an amount of maintenance agent which has not been used, or which may be recycled.

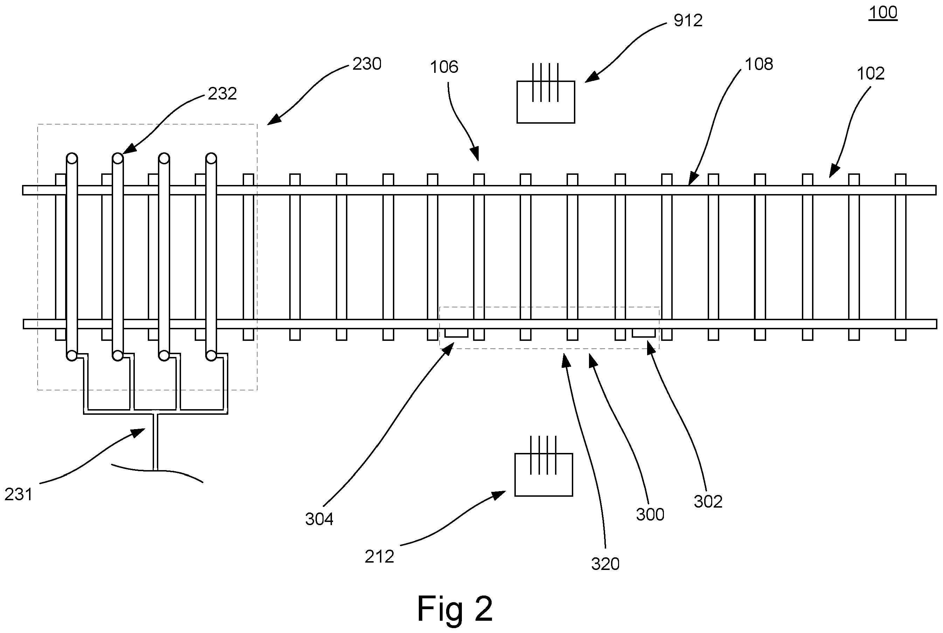

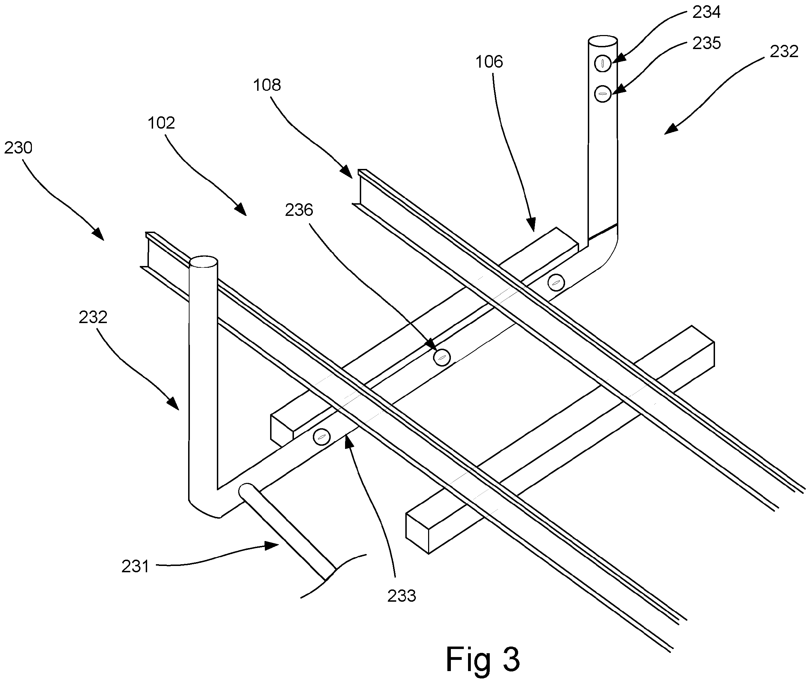

The dispensing unit 230 comprises four pairs of dispensing arms 232, wherein each pair comprises two dispensing arms 232 which are provided on opposite sides of the track. The dispensing unit 230 comprises four dispensing arms 232 on each side of the track, see Fig. 2. Thus, the dispensing unit 230 comprises eight dispensing arms 232. It is obvious that this embodiment is non-limiting and that any number of dispensing arms 232 may be used. For illustrative purposes, only one of these dispensing arms 232 is illustrated in Fig. 3.

The four connection hoses 239 are connected to a respective one of the four pairs of dispensing arms 232.

Note that in Fig. 2, only the antenna unit 212, the dispensing unit 230 and the sensor unit 320 of the dispensing device 200 is shown. In particular, neither the full detection unit 210, comprising the RFID tags 214, 216, nor the control unit 220 is shown. Additionally, the train 110 has been left out from Fig. 2.

The four dispensing arms 232 have different heights. According to an alternative embodiment, however, some or all of the arms 232 may have the same heights.

In the present embodiment, and in what follows, the first, second, third and fourth dispensing arms 232 are identified from the right to the left in Fig. 1. In other words, the train 110 arrives to the first arm 232 first and to the fourth arm 232 last. According to another embodiment, however, the first, second, third and fourth dispensing arms 232 are identified from the left to the right in Fig. 1.

The first and second dispensing arms 232 are arranged to dispense the maintenance agent on at least a part of an entrance step related to a door 116 of the train 110. The third dispensing arm 232 is arranged to dispense the maintenance agent on at least a side part of the train 110. The fourth dispensing arm 232 is arranged to dispense the maintenance agent on at least a part of an underside of the train 110. Also, a bogie or other selected sections may be dispensed by one or several of the arms 232.

With reference two Fig. 3, the two dispensing arms 232 comprised in a pair of dispensing arms 232 are connected to each other by means of a transversely extending portion 233, which is comprised in the dispensing unit 230. At least one of the dispensing arms 232 is connecteble to the transversely extending portion 233, e.g. by means of conventional fastening means, such as flanges and screws or similar. Hence, the transversely extending portion 233 can be introduced under a pair of railway rails 108 and connected to the dispensing arm 232 for easy installation. The transversely extending portion 233 is provided in abutment with a side portion of a sleeper 106 on which the pair of railway rails 108 are provided. For example, the transversely extending portion 233 is connected to the sleeper 106 by means of a fastening device (not illustrated), e.g. including screws or similar.

Each dispensing arm 232 comprises two dispensing nozzles 234, 235. The upper dispensing nozzle 234 has an elongated vertical opening. The lower dispensing nozzle 235 has an elongated horizontal opening. Thereby, the two dispensing nozzles 234, 235 give rise to different dispensing patterns, or spray patterns. Note that both dispensing arms 232 in Fig. 3 comprise dispensing nozzles 234, 235, but that the upper 234 and lower 235 on the left arm 232 in Fig. 3 cannot be seen. However, also the left arm 232 comprises nozzles 234, 235 which are directed substantially toward a center portion of the railway track 102. For example, each dispensing arm 232 comprises a non-return valve, e.g. at each of the nozzles 234, 235.

The dispensing nozzles 234, 235 may dispense the maintenance agent at least on a side part or an underside of the train 110, such as part of a bogie, an entrance step, or a side portion, etc.

The transversely extending portion 233 comprises three dispensing nozzles 236. The dispensing nozzles 236 have elongated openings provided in the transverse direction.

The three dispensing nozzles 236 may dispense the maintenance agent on at least a part of an underside of the train 110.

The dispensing nozzles 234, 235, 236 may be rotated and/or inclined. Thereby, a more directed dispensing pattern may be provided. A rotation and inclination operation of the dispensing nozzles 234, 235, 236 may be implemented manually. More preferably, however, the rotation and inclination operation of the dispensing nozzles 234, 235, 236 are implemented automatically by means of a nozzle adjustment unit (not shown) provided in relation to each nozzle and connected to the control unit 230.

The dispensing unit 230 comprises valves (not shown) which may open or close each of the dispensing nozzles 234, 235, 236 for dispensing the maintenance agent. The valves are configured to be opened or closed by receiving a control signal. The control signal is received from the control device 220. The valves may be gradually opened. Alternatively, the valves are arranged at the control unit 220, wherein a plurality of connection hoses are arranged between the valves and the dispensing units 230.

The dispensing unit 230 also may comprise a return valve (not shown) which is connected to the return hose in the connection arrangement 231.

According the present embodiment, the dispensing device 200 further comprises a sensor unit 300 which is electrically connected to the control unit 220 by means of the cable 310, see Fig. 1. Clearly, according to an alternative embodiment, this connection may be implemented wirelessly. The sensor unit 300 is arranged for providing a position and a velocity of the rolling stock. For example, the sensor unit 300 comprises first and second sensors, such as a first magnetic sensor 302 and second magnetic sensor 304 which are provided on the rails 108. The second magnet sensor 304 is provided closer to the dispensing unit 230 than the first magnet sensor 302. Each of the sensors is adapted to generate a signal when a predetermined part of the rolling stock passes the sensor. More specifically, each magnetic sensor 302, 304 is adapted to generate a signal when a wheel flange 112, 114 of a wheel of the train 110 is in magnetic communication with the magnetic sensor 302, 304. The magnetic communication may be established by the wheel flange 112, 114 being very close to, passing by, or abutting, the magnetic sensor 302, 304. Alternatively, each magnetic sensor 302, 304 is adapted to generate a signal when a wheel axle of the train 110 is in magnetic communication with the magnetic sensor 302, 304. The distance between the sensors 302, 304 is predetermined, wherein the velocity of the train is calculated, e.g. by means of calculating means in the sensor unit 300 or in the control unit 220.

Further, the dispensing device can comprise a comparing unit 330 for comparing a velocity provided by the sensor unit 300 and a velocity provided by means of the detection unit 210. In the present embodiment, the comparing unit 330 is provided in the control unit 220. It is understood, however, that the comparing unit 330 may be provided in other locations, e.g. in the sensor unit 320.

The dispensing device 200 is connected to a computer device 400. More specifically, the computer unit 224 in the control unit 220 is adapted for wireless two-way communication with the computer device 400. The computer device 400 and the computer unit 224 are connected to a wireless computer network. Alternatively, however, the computer device 400 may be configured to communicate with the telecommunications module (not shown) comprised in the computer unit 224. The telecommunications module may implement mobile communication between the control unit 220 and the computer device 400, using e.g. General packet radio service, GPRS, or a similar technology well-known to a person skilled in the art.

The computer device 400 may be a stationary computer or a portable computer device, such as a, laptop, a smart phone or an ipad.

Moreover, the computer device 400 is connected to a server 410. In the present embodiment, the server is located remotely from the dispensing unit 230.

Thereby, the computer device 400 may retrieve historical data of the train 110 from a database comprised in the server 410. Examples of historical data have been explained in the above. An operator associated with the dispensing operation may control functions and settings related to the operation by means of the computer 400. The computer 400 may be arranged to receive an e-mail or a SMS message from the dispensing device 200 for informing the associated operator about a status of the device 200, e.g. related to the operation or service of the device, or the supply of the maintenance agent.

Next, an embodiment of the inventive method for automatic dispensing of a maintenance agent will be described with reference to Figs. 1-5. First, the train 110 is moving in the railway environment 100 on the railway track 102, approaching the dispensing area 104. The train 110 has a velocity v. For example the train 110 is moving on a mainline railway track, optionally at a transport speed for transporting cargo or passengers as scheduled without any dispensing operation.

When the train 110 enters the dispensing area 104 or, by passing by a certain reference point on the railway track 102 before the dispensing area, the detection unit 210 is activated and generates a signal. For example, the passive RFID tag 214 becomes energized by the antenna unit 212. For example, the reference point is a point at which the RFID tag 214 may be sufficiently energized for generating a signal. Optionally, the reference point may be a predetermined point on the railway track 102, such as 50-100 m from the dispensing unit 230.

The detection unit 210 generates a detection signal and an identification signal. For example, after being energized, the RFID tag 214 generates the detection signal and the identification signal. The detection signal and the identification signal are sent to the control unit 220. They are received by the electrical unit 222 and communicated to the computer unit 224. The control unit 220 determines by means of the identification signal and stored historical information of the identified train 110 if the train 110 is approved for dispensing operation or not. Further, the detection signal activates the pump for pumping maintenance agent from the reservoir to set the dispensing device in a mode for instant dispensing operation. For example the control unit 220 is adapted to activate the pump and open a recirculation valve of a recirculation line to pump maintenance agent in said recirculation line upon receipt of the detection signal. For example, the maintenance agent is pumped from the reservoir 226 and around in the recirculation line and back to the reservoir 226.

Then the train 110 passes the sensor unit 300 for determining the speed and position of the train 110. The sensor unit 300 generates position signals and optionally also a velocity signal and sends it to the control unit 220. Alternatively, the control unit 220 determines the velocity of the train 110 based on the position signals from the sensor unit 300. For example, the velocity is determined by a single reference point, such as a wheel or wheel axle of the train. For example, the velocity is determined for each single reference point, such as each wheel or each wheel axle of the train, passing the sensor unit 300. Then the control unit 220 determines the dispensing schedule for the train 110 based on the velocity of the train 110 and the position thereof. For example, the dispensing schedule is based on the velocity and detected positions of the wheels or wheel axles of the train 110. For example, the dispensing schedule is also based on the identity of the train 110 as provided by the detection unit 210, e.g. so as to identify specific positions for dispensing maintenance agent, such as entrance steps. For example, the database includes information about the train 110, such as type of train, dimensions, etc.

When an estimated time of arrival of the all the dispensing regions 610, 620 in front of the dispensing nozzles 234, 235, 236 has been established, the control unit 220 sends a control signal to the dispensing unit 230, e.g. via the electrical wire in the connection arrangement 231 or through a wireless connection. The control signal controls the operation of the valves as has been described above. The valves may be opened or closed for controlling the dispensing nozzles 234, 235, 236, thereby controlling the dispensing of the maintenance agent. For example, the recirculation valve is closed a short time before opening the valves to the dispensing nozzles, building up a high pressure in the dispensing unit for immediate and fast dispensing operation. From the estimated time of arrival determined by means of the position and velocity of the train 110, the dispensing schedule may be determined. Hence, the dispensing device 200 includes a timing device. For example, the timing device is included in the control unit 220. The dispensing schedule optionally takes into account other parameters, such as the acceleration or deceleration of the train 110, a predetermined duration of the dispensing operation, historical data, etc. The control unit 220 retrieves historic data from the memory in the computer unit 224 or from the server 410 by means of the computer device 400. Data related to statistics, diagnostics and management data may be retrieved from the memory. Thereby, the data may be reviewed and reports based on the data may be generated.

As has been described above in the summary, the distance between the dispensing nozzle 234, 235, 236 and the dispensing region 610, 620 has to be compensated for, since it takes some time for the maintenance agent to reach the dispensing region 610, 620 on the train 110, since the dispensing speed of the maintenance agent is finite. The finiteness of the speed of the electrical signals, wired or wireless, may also have to be compensated for. Then, the maintenance agent is dispensed on the train 110 based on the dispensing schedule. The dispensing schedule is based on velocity and position of the train 110 and also on time as the distances between different components of the dispensing device 200 are known, and optionally also on the identity of the train 110.

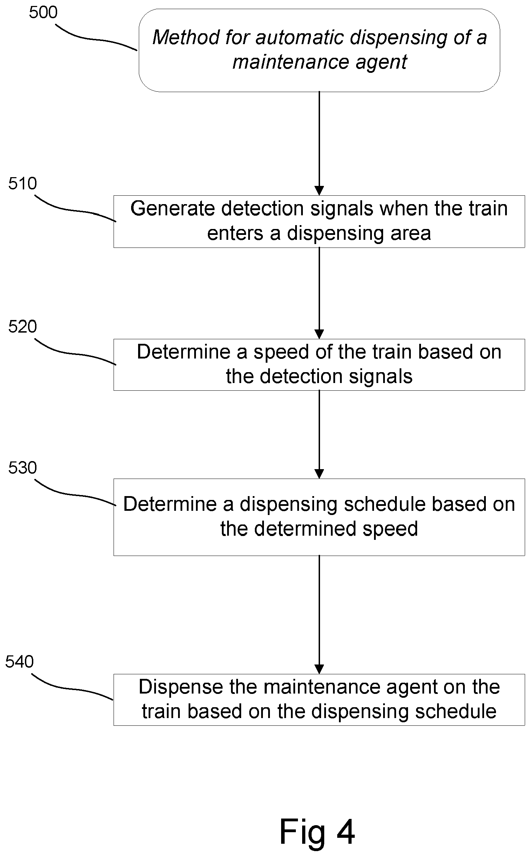

Next, an alternative embodiment of the inventive method for automatic dispensing of a maintenance agent will be described with reference to Figs. 1-5. In Fig. 4 an embodiment of the inventive method (Box 500) is schematically illustrated in a block diagram. The method is implemented in the dispensing device 200 according to Figs. 1-3 and Fig. 5.

First, the train 110 is moving in the railway environment 100 on the railway track 102, approaching the dispensing area 104. The train 110 has a a velocity v.

When the train 110 enters the dispensing area 104, by passing by a certain reference point on the railway track 102, the passive RFID tag 214 becomes energized by the antenna unit 212. Subsequently, the passive RFID tag 216 becomes energized by the antenna unit 212.

The reference point is a point at which the RFID tag 214 or 216 may be sufficiently energized for generating a signal. Optionally, the reference point may be a predetermined point on the railway track 102.

After being energized, the RFID tag 214 generates a detection signal (Box 510). The detection signal is sent to the control unit 220. It is received by the electrical unit 222 and communicated to the computer unit 224.

After being energized, the RFID tag 216 generates a detection signal (Box 510). The detection signal is sent to the control unit 220. It is received by the electrical unit 222 and communicated to the computer unit 224.

A time stamp associated to each of the detection signals are established by the computer unit 224. The detection signal sent from the first RFID tag 214 is associated with a first time stamp τ₁ while the detection signal sent from the second RFID tag 216 is associated with a second time stamp τ₂.

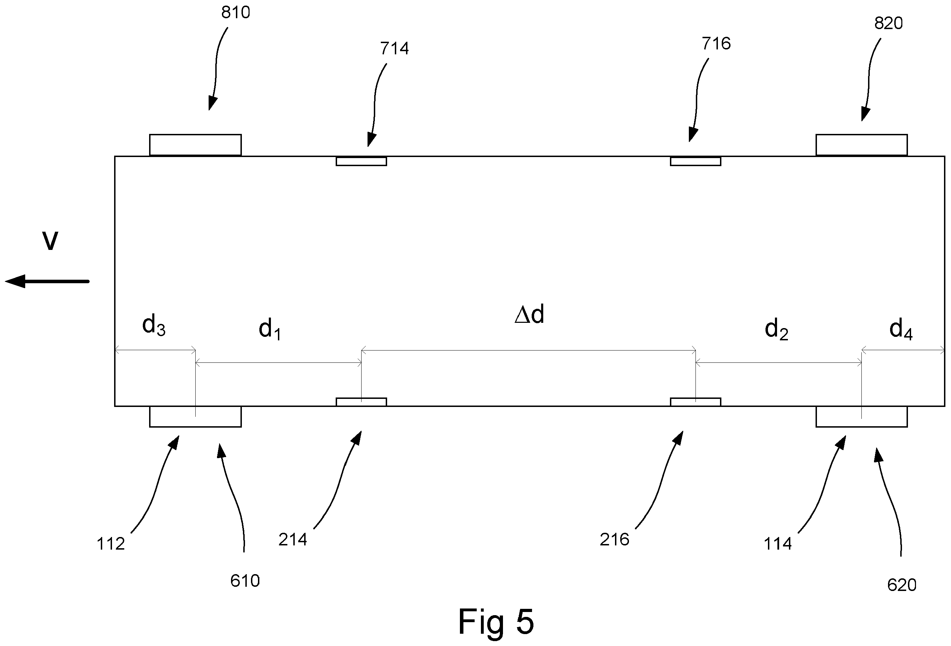

The distance between the two RFID tags 214 and 216 which are provided in the train 110 is given by Δd, see Fig. 5.

Thereafter, the speed v_{det} of the train 110 is determined based on the detection signals (Box 520). More specifically, the processor comprised in the computer unit 224 performs this calculation. First, the time difference Δτ=τ₂-τ₁ is formed. Thereafter, the speed is determined by means of the formula v_{det}=Δd/Δr. In fact, this is an average speed estimate of the train 110 during the time Δτ.

It is understood that this is just one way of establishing the speed v_{det}. Other ways of establishing the speed v_{det} are possible.

Next, when the train 110 passes by the sensor unit 300, the speed v of the train 110 may be determined in a second, independent way. As has been described in the above, a speed v_{M} of the train 110 may be determined. The procedure of determining v_{M} has been described in the summary section above in to non-limiting examples.

By means of the comparing unit 330, the speed v_{det} determined based on the detection signals is compared with the velocity v_{M} determined by the sensor unit.

In a first non-limiting example, the difference Δv=v_{det}-v_{M} is formed. If Δv is smaller than a predetermined threshold value Δv_{T}, the estimated speed v_{det} is considered to be acceptable.

In a second non-limiting example, the difference Δ=(v_{det}-v_{M})/v_{det} is formed. If Δ is smaller than a predetermined threshold value Δ_{T}, the estimated speed v_{det} is considered to be acceptable.

For example, the threshold values Δv_{T} and Δ_{T} may be retrieved from the memory in the computer unit 224 or from the server 410. The threshold values may be determined by considering the historic data.

In a third non-limiting example, an estimated speed of the train 110 is formed by the average value V=(v_{det}+v_{M})/2.

Additionally, the magnetic sensors 302, 304 may be used for determining a position and an acceleration, or deceleration, of the train 110, and act as triggers for specific dispensing areas 104.

The speed v_{det} is an estimation of the true speed v.

All the distances between the RFID tags 214 and 216 and the regions on the train 110 which are to be dispensed with the maintenance agent are assumed to be known, see Fig. 5. For example, the distance between the first RFID tag 214 and a first dispensing region 610 is d₁ and the distance between the second RFID tag 216 and a second dispensing region 620 is d₂. There may be additional dispensing regions (not shown). The distance from a front end of the train 110 to the first dispensing region 610 is d₃. The distance from a back end of the train 110 to the second dispensing region 620 is d₄.

Based on the speed v_{det}, and at least one of the distances d₁, d₂, d₃, d₄ and Δd, an estimated time of arrival of all the dispensing regions 610, 620 in front of the dispensing nozzles 234, 235, 236 may be determined.

When an estimated time of arrival of the all the dispensing regions 610, 620 in front of the dispensing nozzles 234, 235, 236 has been established, the control unit 220 sends a control signal to the dispensing unit 230 via the electrical wire in the connection arrangement 231. The control signal controls the operation of the valves as has been described above. The valves may be opened or closed for controlling the dispensing nozzles 234, 235, 236, thereby controlling the dispensing of the maintenance agent.

From the estimated time of arrival, a dispensing schedule may be determined (Box 530). The dispensing schedule takes into account other parameters, such as the speed of the train 110, the acceleration or deceleration of the train 110, a predetermined duration of the dispensing operation, historical data, etc. The control unit 220 retrieves historic data from the memory in the computer unit 224 or from the server 410 by means of the computer device 400.

Data related to statistics, diagnostics and management data may be retrieved from the memory. Thereby, the data may be reviewed and reports based on the data may be generated.

As has been described above in the summary, the distance between the dispensing nozzle 234, 235, 236 and the dispensing region 610, 620 has to be compensated for, since it takes some time for the maintenance agent to reach the dispensing region 610, 620 on the train 110, since the dispensing speed of the maintenance agent is finite. The finiteness of the speed of the electrical signals, wired or wireless, may also have to be compensated for.

Finally, the maintenance agent is dispensed on the train 110 based on the dispensing schedule (Box 540). This operation has been detailed above.

Next, a complementing embodiment of the present inventive concept will be described with reference to Figs. 2 and 5.

Since there are four dispensing arms 232 provided on each side of the railway track 102, cf. Fig. 2, the train 110 may be dispensed with the maintenance agent on both sides of the train 110.

Since there are four dispensing arms 232 provided on each side of the railway track 102, and RFID tags 214, 216, 714, 716 are provided on both sides of the train 110, see Fig. 5, the train 110 may be dispensed when approaching the dispensing unit from either direction, i.e. from the right or from the left in Fig. 1 and 2. The antenna unit 212 is provided on the left-hand side of the track 102 in the direction of motion of the train 110, as indicated by the arrow. Typically, but not exclusively, the antenna unit 212 may only communicate with RFID tags 214, 216 which are provided on the same side on the train 110 as the antenna unit 212 is located, i.e. on the left-hand side of the train 110 in its direction of motion. Therefore, according to an alternative embodiment, there is provided an additional antenna unit 912 on the other side of the train 110, i.e. on the right-hand side of the track 102 in the direction of motion of the train 110. Thus, the antenna unit 912 is adapted to communicate with RFID tags 714 and 716 which are provided on the right-hand side of the train 110 in its direction of motion. Other details related to the antenna unit 912 and the RFID tags 714, 716 are analogous to those described above in relation to the antenna unit 212 and the tags 214, 216.

According to one embodiment the dispensing device 200 comprises at least two detection units 210 and at least two sensor units 300, arranged along the railway track on different sides of the dispensing unit 230 so that a train 110 can approach the dispensing device 200 from either direction. For example the dispensing device 200 comprises four sensor units 300, one on each rail of the railway track, wherein two sensor units 300 are arranged on each side of the dispensing unit 230.

Optionally, the dispensing device 200 may further comprise a camera unit (not shown). The camera unit may monitor the dispensing operation before and/or after the train 110 passes the dispensing unit 230. The camera unit is adapted to record at least one of an image, a video or an infrared image of the train 110 and/or a part of the dispensing area 104. Data recorded by the camera unit may be stored in the memory and later retrieved therefrom as historical data.

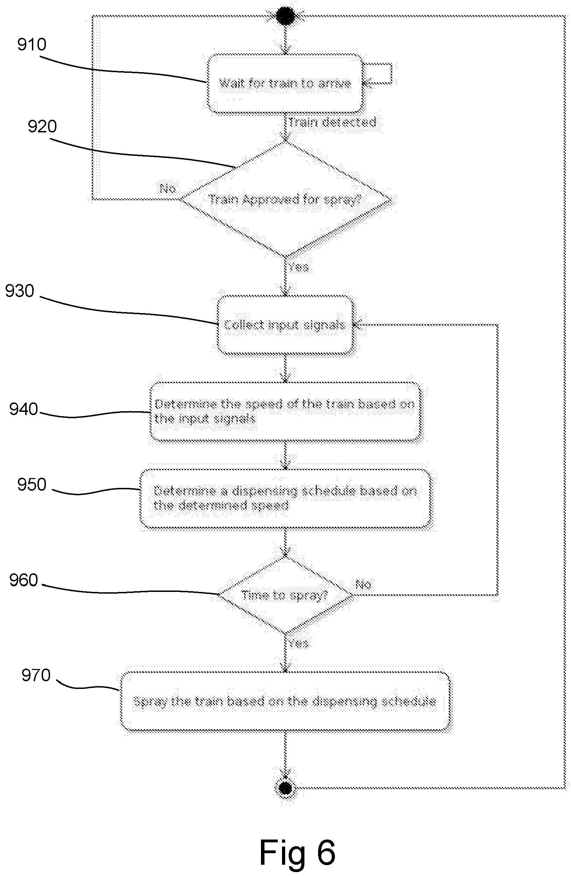

Fig. 6 is block diagram of an alternative embodiment of a method in accordance with the inventive concept.

First, when no train 110 is nearby the dispensing area 104, the dispensing device 200 is in an idle mode (Box 910). When a train 110 is detected by the detection unit 210, an identification signal is sent to the control unit 220. The identification signal comprises data about an identity of the train 110. Optionally, the identification signal may comprise additional operational data, such as historic data, about the train 110. Alternatively, the operational data may be retrieved from the memory. The control unit 220 processes the information signal together with the operational data and determines, in accordance with the invention, whether the train 110 is approved for spraying (Box 920).

If the train 110 is not approved for spraying, the dispensing device 200 returns to the idle mode.

If the train 110 is approved for spraying, the control unit 220 sends a confirmation signal to the detection unit 210 which is instructed to send input signals to the control unit 220, which are collected by the control unit 220 (Box 930). The input signal may be a detection signal.

Then, the speed of the train 110 is determined based on the input signals (Box 940) and, thereafter, a dispensing schedule based on the determined speed is determined (Box 950). These steps have been detailed above in another embodiment.

The control unit 220 then determines when to spray (Box 960). If it is too early, more input signals may be collected, thereby returning to Box 930. Hence, a continuous update about the velocity may be provided. If it is time to spray, the control unit 220 sends a control signal to the dispensing unit 960 which starts spraying based on the dispensing schedule (Box 970) as has been described above. Clearly, additional input signals may be collected during the spraying operation if needed. After the spraying, the dispensing device returns to the idle mode.

The invention has mainly been described above with reference to a few embodiments. However, as is readily appreciated by a person skilled in the art, other embodiments than the ones disclosed above are equally possible within the scope of the invention, as defined by the appended patent claims. For example, the inventive dispensing device may be utilized for a rolling stock comprising a plurality of train units. In addition, there may be a collection tray provided in relation to the dispensing unit for collecting the dispensing agent and melted water from the ice and the snow. The collected liquids may be recycled, e.g. by means of purification, or disposed with.

## Claims

1. A device for automatic dispensing of a maintenance agent, such as an anti-icing agent or a de-icing agent, on specific parts of a rolling stock (110), such as a locomotive or a carriage, travelling on a railway track (102), the device comprising:
a dispensing unit (230) adapted to dispense said maintenance agent on said specific parts of the rolling stock (110),
a detection unit (210) configured to generate a detection signal before said rolling stock (110) reaches the dispensing unit (230),
a sensor unit (300) configured to determine a position of a part of the rolling stock (110) and generate a position signal, and for determining a velocity of the rolling stock (110), and
a control unit (220) which is configured to
receive said detection signal from said detection unit (210),
receive said position signal from said sensor unit (300),
determine a dispensing schedule based on said rolling-stock velocity, said dispensing schedule comprising a time schedule having data about when to dispense the maintenance agent from the dispensing unit and information about a time duration of how long to dispense the maintenance agent from the dispensing unit (230), and
transmit a control signal to the dispensing unit (230), wherein the control signal is configured to control said dispensing unit (230) based on said dispensing schedule,
**characterised in that** the detection unit is configured to generate an identification signal, said identification signal comprising data about an identity of the rolling stock, and wherein the control unit is configured to determine if a rolling stock is approved for dispensing operation based on said identification signal.

2. A device according to claim 1, comprising an information database for storing information of previous dispensing operations related to the identity of the rolling stock (110), and wherein the control unit (220) is configured to determine whether a rolling stock (110) is approved for dispensing operation based on stored information of previous dispensing operations for said rolling stock (110).

3. A device according to any of the preceding claims, wherein said detection unit (210) comprises an antenna unit (212) comprising at least one antenna (213), and an electronic tracking unit which is adapted to be arranged on or in said rolling stock (110), the electronic tracking unit being arranged to communicate with said antenna unit (212).

4. A device according to any of the preceding claims, wherein the control unit (220) is configured to start a pump connected to the dispensing unit (230) upon receipt of the detection signal from the detection unit (210) and before transmitting the control signal to the dispensing unit (230).

5. A device according to claim 4, wherein the control unit (220) is configured to open a recirculation valve for recirculating maintenance agent by means of the pump upon receipt of the detection signal, and wherein the control unit (220) is configured to close the recirculation valve before transmitting the control signal to the dispensing unit (230).

6. A device according to any of the preceding claims, wherein the sensor unit (300) comprises a first position sensor and a second position sensor arranged with a gap between them and being arranged with a predetermined distance from the first position sensor to the second position sensor, and wherein a timing device is provided to calculate a time between a signal from the first position sensor and a signal from the second position sensor.

7. A device according to any of the preceding claims, comprising a first detection unit, a second detection unit, a first sensor unit and a second sensor unit, wherein the first detection unit is arranged a distance from the dispensing unit (230) in a first direction along the railway track (102), the second detection unit is arranged a distance from the dispensing unit (230) in the opposite direction along the railway track (102), the first sensor unit is arranged between the first detection unit and the dispensing unit (230), and the second sensor unit is arranged between the second detection unit and the dispensing unit (230).

8. A device according to any of the preceding claims, wherein the dispensing unit (230) comprises at least one dispensing member having at least one dispensing arm (232) and a transversely extending portion (233), the dispensing arm (232) being connectable to the transversely extending portion (233).

9. A device according to claim 8, wherein the transversely extending portion (233) extends under the railway track (102) in a direction across the railway track (102).

10. A device according to claim 9, wherein the transversely extending portion (233) extends along a railway sleeper (106) and is fastened to the railway sleeper (106) by means of a fastening device, and wherein the dispensing arm (232) extends in a direction upwards from the transversely extending portion (233).

11. A method for automatic dispensing of a maintenance agent, such as an anti-icing agent or a de-icing agent, on specific parts of a rolling stock (110), such as a locomotive or a carriage, travelling on a railway track (102), the method comprising:
generating a detection signal and an identification signal comprising data about an identity of the rolling stock (110) before said rolling stock (110) reaches a dispensing unit (230) for dispensing the maintenance agent,
determining a position and a velocity of the rolling-stock (110) by means of a sensor unit (300),
forwarding the detection signal and the identification signal to a control unit (220), determining if the rolling stock (110) is approved for dispensing operation based on said identification signal, and at least if the rolling stock (110) is approved for dispensing operation determining a dispensing schedule based on said rolling-stock velocity, said dispensing schedule comprising a time schedule having data about when to dispense the maintenance agent from the dispensing unit and information about a time duration of how long to dispense the maintenance agent from the dispensing unit (230), and
if the rolling stock (110) is approved for dispensing operation, dispensing said maintenance agent based on said dispensing schedule.

12. A method according to claim 11, comprising the steps of storing information of previous dispensing operations related to the identity of the rolling stock (110), and determining whether a rolling stock (110) is approved for dispensing operation based on stored information of previous dispensing operations for said rolling stock (110).

13. A method according to any of claims 11-12, comprising the step of pumping maintenance agent in a recirculation line upon detection of a rolling stock (110) and before dispensing of the maintenance agent.

14. A method according to any of claims 11-13, comprising the step of dispensing maintenance agent on the rolling stock (110) travelling on a mainline railway track.

15. A method according to any of claims 11-14, comprising the steps of detecting a first rolling stock travelling in a first direction on the railway track (102) by means of a first detector, generating a first detection signal before said first rolling stock reaches the dispensing unit (230), determining the position and the velocity of the first rolling stock by means of a first sensor unit, determining the dispensing schedule based on the velocity of the first rolling stock, dispensing said maintenance agent based on the dispensing schedule for the first rolling stock, detecting a second rolling stock travelling in a second direction on the railway track (102) opposite to the first direction by means of a second detector, generating a second detection signal before said second rolling stock reaches the dispensing unit, determining the position and the velocity of the second rolling stock by means of a second sensor unit, determining the dispensing schedule based on the velocity of the second rolling stock, and dispensing said maintenance agent based on the dispensing schedule for the second rolling stock.

## Patentansprüche

1. Vorrichtung zum automatischen Abgeben eines Pflegemittels, wie z. B. eines Anti-Vereisungsmittels oder eines Enteisungsmittels, auf bestimmten Teilen eines Schienenfahrzeugs (110), wie z. B. einer Lokomotive oder eines Eisenbahnwagens, die auf einem Schienenstrang fahren, wobei die Vorrichtung aufweist:
eine Abgabeeinheit (230), die dazu eingerichtet ist, das Pflegemittel auf den bestimmten Teilen des Schienenfahrzeugs (110) zu verteilen,
eine Erfassungseinheit (210), die dazu eingerichtet ist, ein Erfassungssignal zu erzeugen, bevor das Schienenfahrzeug (110) die Abgabeeinheit (230) erreicht,
eine Sensoreinheit (300), die dazu eingerichtet ist, eine Position eines Teils des Schienenfahrzeugs (110) zu bestimmen und ein Positionssignal zu erzeugen, und
eine Geschwindigkeit des Schienenfahrzeugs (110) zu bestimmen, und
eine Steuereinheit (220), die dazu eingerichtet ist,
das Erfassungssignal von der Erfassungseinheit (210) zu empfangen,
das Positionssignal von der Sensoreinheit (300) zu empfangen,
einen Abgabeplan basierend auf der Geschwindigkeit des Schienenfahrzeugs zu bestimmen, wobei der Abgabeplan einen Zeitplan, der Daten aufweist, wann das Pflegemittel aus der Abgabeeinheit abgegeben werden soll, und Informationen über eine Zeitdauer umfasst, wie lange das Pflegemittel aus der Abgabeeinheit (230) abzugeben ist, und
ein Steuersignal an die Abgabeeinheit (230) zu übertragen, wobei das Steuersignal dazu eingerichtet ist, die Abgabeeinheit (230) basierend auf dem Abgabeplan zu steuern,
**dadurch gekennzeichnet, dass**
die Erfassungseinheit dazu eingerichtet ist, ein Identifikationssignal zu erzeugen, wobei das Identifikationssignal Daten über eine Identität des Schienenfahrzeugs aufweist, und wobei die Steuereinheit dazu eingerichtet ist, zu bestimmen, ob ein Schienenfahrzeug für den Abgabevorgang basierend auf dem Identifikationssignal zugelassen ist.

2. Vorrichtung nach Anspruch 1, die eine Informationsdatenbank zum Speichern von Daten von vorherigen Abgabevorgängen bezogen auf die Identität des Schienenfahrzeugs (110) aufweist, und wobei die Steuereinheit (220) dazu eingerichtet ist, zu bestimmen, ob ein Schienenfahrzeug (110) für den Abgabevorgang basierend auf den gespeicherten Daten der vorherigen Abgabevorgänge für das Schienenfahrzeug (110) zugelassen ist.

3. Vorrichtung nach einem der vorhergehenden Ansprüche, wobei die Erfassungseinheit (210) eine Antenneneinheit (212) mit mindestens einer Antenne (213) und eine elektronische Verfolgungseinheit aufweist, die dazu eingerichtet ist, auf oder in dem Schienenfahrzeug (110) angeordnet zu sein, wobei die elektronische Verfolgungseinheit dazu eingerichtet ist, mit der Antenneneinheit (212) zu kommunizieren.

4. Vorrichtung nach einem der vorhergehenden Ansprüche, wobei die Steuereinheit (220) dazu eingerichtet ist, eine mit der Abgabeeinheit (230) verbundene Pumpe bei Empfang des Erfassungssignals von der Erfassungseinheit (210) und nach dem Übertragen des Steuersignals an die Abgabeeinheit (230) zu starten.

5. Vorrichtung nach Anspruch 4, wobei die Steuereinheit (220) dazu eingerichtet ist, ein Rückführungsventil zum Rückführen des Pflegemittels durch die Pumpe bei Empfang des Erfassungssignals zu öffnen, und wobei die Steuereinheit (220) dazu eingerichtet ist, das Rückführungsventil vor dem Übertragen des Steuersignals an die Abgabeeinheit (230) zu schließen.

6. Vorrichtung nach einem der vorhergehenden Ansprüche, wobei die Sensoreinheit (300) einen ersten Positionssensor und einen zweiten Positionssensor aufweist, die mit einer Lücke dazwischen angeordnet sind und mit einem vorbestimmten Abstand von dem ersten Positionssensor zu dem zweiten Positionssensor angeordnet sind, und wobei eine Zeitmessungsvorrichtung vorgesehen ist, um eine Zeit zwischen einem Signal von dem ersten Positionssensor und einem Signal von dem zweiten Positionssensor zu berechnen.

7. Vorrichtung nach einem der vorhergehenden Ansprüche, die eine erste Erfassungseinheit, eine zweite Erfassungseinheit, eine erste Sensoreinheit und eine zweite Sensoreinheit umfasst, wobei die erste Erfassungseinheit in einem Abstand von der Abgabeeinheit (230) in einer ersten Richtung entlang des Schienenstrangs (102) angeordnet ist, wobei die zweite Erfassungseinheit in einem Abstand von der Abgabeeinheit (230) in der entgegen gesetzten Richtung entlang des Schienenstrangs (102) angeordnet ist, wobei die erste Sensoreinheit zwischen der ersten Erfassungseinheit und der Abgabeeinheit (230) angeordnet ist, und wobei die zweite Sensoreinheit zwischen der zweiten Erfassungseinheit und der Abgabeeinheit (230) angeordnet ist.

8. Vorrichtung nach einem der vorhergehenden Ansprüche, wobei die Abgabeeinheit (230) mindestens ein Abgabeelement aufweist, das mindestens einen Abgabearm (232) und einen sich quer dazu erstreckenden Abschnitt (233) aufweist, wobei der Abgabearm (232) mit dem sich quer dazu erstreckenden Abschnitt (233) verbindbar ist.

9. Vorrichtung nach Anspruch 8, wobei der sich quer erstreckende Abschnitt (233) sich unterhalb des Schienenstrangs (102) in einer Richtung quer zu dem Schienenstrang (102) erstreckt.

10. Vorrichtung nach Anspruch 9, wobei der sich quer erstreckende Abschnitt (233) sich entlang einer Eisenbahnschwelle (106) erstreckt und an der Eisenbahnschwelle (106) mittels einer Befestigungseinrichtung befestigt ist, und wobei der Abgabearm (232) sich in einer Richtung von dem sich quer erstreckenden Abschnitt (233) nach oben erstreckt.

11. Verfahren zum automatischen Abgeben eines Pflegemittels, wie z. B. eines Anti-Vereisungsmittels oder eines Enteisungsmittels, auf bestimmten Teilen eines Schienenfahrzeugs (110), wie z. B. einer Lokomotive oder eines Eisenbahnwagens, die auf einem Schienenstrang (102) fahren, wobei das Verfahren folgende Schritte aufweist:
Erzeugen eines Erfassungssignals und eines Identifikationssignals, das Daten über eine Identität des Schienenfahrzeugs (110) umfasst, bevor das Schienenfahrzeug (110) eine Abgabeeinheit (230) zur Abgabe des Pflegemittels erreicht,
Bestimmen einer Position und einer Geschwindigkeit des Schienenfahrzeugs (110) mittels einer Sensoreinheit (300),
Weiterleiten des Erfassungssignals und des Identifikationssignals an eine Steuereinheit (220), Bestimmen, ob das Schienenfahrzeug (110) für den Abgabevorgang basierend auf dem Identifikationssignal zugelassen ist, und zumindest, wenn das Schienenfahrzeug (110) für den Abgabevorgang zugelassen ist, Bestimmen eines Abgabeplans basierend auf der Geschwindigkeit des Schienenfahrzeugs, wobei der Abgabeplan einen Zeitplan mit Daten, wann das Pflegemittel aus der Abgabeeinheit abzugeben ist, und mit Informationen über eine Zeitdauer umfasst, wie lange das Pflegemittel aus der Abgabeeinheit (230) abzugeben ist, und
wenn das Schienenfahrzeug (110) für den Abgabevorgang zugelassen ist, Abgeben des Pflegemittels basierend auf dem Abgabeplan.

12. Verfahren nach Anspruch 11, das die Schritte des Speicherns von Informationen über vorherige Abgabevorgänge bezogen auf die Identität des Schienenfahrzeugs (110) und des Bestimmens umfasst, ob ein Schienenfahrzeug (110) basierend auf den gespeicherten Informationen von vorherigen Abgabevorgängen für das Schienenfahrzeug (110) für den Abgabevorgang zugelassen ist.

13. Verfahren nach einem der Ansprüche 11 bis 12, das den Schritt des Pumpens von Pflegemittel in eine Rückführungsleitung bei Erfassung eines Schienenfahrzeugs (110) und vor dem Abgeben des Pflegemittels umfasst.

14. Verfahren nach einem der Ansprüche 11 bis 13, das den Schritt des Abgebens von Pflegemittel auf dem Schienenfahrzeug (110) aufweist, das auf einem Hauptleitungsschienenstrang fährt.

15. Verfahren nach einem der Ansprüche 11 bis 14, das die Schritte des Erfassens eines ersten Schienenfahrzeugs, das in einer ersten Richtung auf dem Schienenstrang (102) fährt, mittels einer ersten Erfassungseinrichtung, das Erzeugen eines ersten Erfassungssignals, bevor das erste Schienenfahrzeug die Abgabeeinheit (230) erreicht, das Bestimmen der Position und der Geschwindigkeit des ersten Schienenfahrzeugs mittels einer ersten Sensoreinheit, das Bestimmen des Abgabeplans basierend auf der Geschwindigkeit des ersten Schienenfahrzeugs, das Abgeben des Pflegemittels basierend auf dem Abgabeplan für das erste Schienenfahrzeug, das Erfassen eines zweiten Schienenfahrzeugs, das in einer zweiten Richtung auf dem Schienenstrang (102) fährt, die entgegen gesetzt der ersten Richtung ist, mittels einer zweiten Erfassungseinrichtung, das Erzeugen eines zweiten Erfassungssignals, bevor das zweite Schienenfahrzeug die Abgabeeinheit erreicht, das Bestimmen der Position und der Geschwindigkeit des zweiten Schienenfahrzeugs mittels einer zweiten Sensoreinheit, das Bestimmen des Abgabeplans basierend auf der Geschwindigkeit des zweiten Schienenfahrzeugs und das Abgeben des Pflegemittels basierend auf dem Abgabeplan für das zweite Schienenfahrzeug aufweist.

## Revendications

1. Dispositif de distribution automatique d'un agent de maintenance, tel qu'un agent d'antigivrage ou un agent de dégivrage, sur des parties spécifiques d'un matériel roulant (110), tel qu'une locomotive ou un wagon, se déplaçant sur une voie ferrée (102), le dispositif comprenant :
une unité de distribution (230) conçue pour distribuer ledit agent de maintenance sur lesdites parties spécifiques du matériel roulant (110),
une unité de détection (210) configurée pour générer un signal de détection avant que ledit matériel roulant (110) n'atteigne l'unité de distribution (230),
une unité de capteur (300) configurée pour déterminer une position d'une partie du matériel roulant (110) et générer un signal de position, et pour déterminer une vitesse du matériel roulant (110), et
une unité de commande (220) laquelle est configurée pour
recevoir ledit signal de détection émanant de ladite unité de détection (210),
recevoir ledit signal de position émanant de ladite unité de capteur (300),
déterminer un programme de distribution sur la base de ladite vitesse de matériel roulant, ledit programme de distribution comprenant un échéancier ayant des données sur le moment auquel distribuer l'agent de maintenance à partir de l'unité de distribution et des informations sur la durée pendant laquelle distribuer l'agent de maintenance à partir de l'unité de distribution (230), et
transmettre un signal de commande à l'unité de distribution (230), où le signal de commande est configuré pour commander ladite unité de distribution (230) sur la base dudit programme de distribution,
**caractérisé en ce que**
l'unité de détection est configurée pour générer un signal d'identification, ledit signal d'identification comprenant des données sur une identité du matériel roulant, et où l'unité de commande est configurée pour déterminer si un matériel roulant est autorisé à subir une opération de distribution sur la base dudit signal d'identification.

2. Dispositif selon la revendication 1, comprenant une base de données d'informations destinée à mémoriser des informations de précédentes opérations de distribution associées à l'identité du matériel roulant (110), et où l'unité de commande (220) est configurée pour déterminer si un matériel roulant (110) est autorisé à subir une opération de distribution sur la base des informations mémorisées de précédentes opérations de distribution pour ledit matériel roulant (110).

3. Dispositif selon l'une quelconque des revendications précédentes, dans lequel ladite unité de détection (210) comprend une unité d'antenne (212) comprenant au moins une antenne (213), et une unité de suivi électronique laquelle est réalisée pour être agencée sur ou dans ledit matériel roulant (110), l'unité de suivi électronique étant agencée pour communiquer avec ladite unité d'antenne (212).

4. Dispositif selon l'une quelconque des revendications précédentes, dans lequel l'unité de commande (220) est configurée pour démarrer une pompe connectée à l'unité de distribution (230) à la réception du signal de détection émanant de l'unité de détection (210) et avant la transmission du signal de commande à l'unité de distribution (230).

5. Dispositif selon la revendication 4, dans lequel l'unité de commande (220) est configurée pour ouvrir une vanne de remise en circulation destinée à remettre en circulation un agent de maintenance au moyen de la pompe à la réception du signal de détection, et où l'unité de commande (220) est configurée pour fermer la vanne de remise en circulation avant la transmission du signal de commande à l'unité de distribution (230).

6. Dispositif selon l'une quelconque des revendications précédentes, dans lequel l'unité de capteur (300) comprend un premier capteur de position et un deuxième capteur de position agencés avec un espace entre eux et étant agencés selon une distance prédéterminée entre le premier capteur de position et le deuxième capteur de position, et où un dispositif de chronométrage est prévu pour calculer un laps de temps entre un signal émanant du premier capteur de position et un signal émanant du deuxième capteur de position.

7. Dispositif selon l'une quelconque des revendications précédentes, comprenant une première unité de détection, une deuxième unité de détection, une première unité de capteur et une deuxième unité de capteur, où la première unité de détection est agencée à une certaine distance de l'unité de distribution (230) dans une première direction le long de la voie ferrée (102), la deuxième unité de détection est agencée à une certaine distance de l'unité de distribution (230) dans la direction opposée le long de la voie ferrée (102), la première unité de capteur est agencée entre la première unité de détection et l'unité de distribution (230), et la deuxième unité de capteur est agencée entre la deuxième unité de détection et l'unité de distribution (230).

8. Dispositif selon l'une quelconque des revendications précédentes, dans lequel l'unité de distribution (230) comprend au moins un organe de distribution ayant au moins un bras de distribution (232) et une partie s'étendant transversalement (233), le bras de distribution (232) pouvant être relié à la partie s'étendant transversalement (233).

9. Dispositif selon la revendication 8, dans lequel la partie s'étendant transversalement (233) s'étend sous la voie ferrée (102) dans une direction transversale à la voie ferrée (102).

10. Dispositif selon la revendication 9, dans lequel la partie s'étendant transversalement (233) s'étend le long d'une traverse de voie ferrée (106) et est fixée sur la traverse de voie ferrée (106) au moyen d'un dispositif de fixation, et où le bras de distribution (232) s'étend dans une direction vers le haut depuis la partie s'étendant transversalement (233).

11. Procédé de distribution automatique d'un agent de maintenance, tel qu'un agent d'antigivrage ou un agent de dégivrage, sur des parties spécifiques d'un matériel roulant (110), tel qu'une locomotive ou un wagon, se déplaçant sur une voie ferrée (102), le procédé comprenant les étapes consistant à :
générer un signal de détection et un signal d'identification comprenant des données sur une identité du matériel roulant (110) avant que ledit matériel roulant (110) n'atteigne une unité de distribution (230) destinée à distribuer l'agent de maintenance,
déterminer une position et une vitesse du matériel roulant (110) au moyen d'une unité de capteur (300),
transmettre le signal de détection et le signal d'identification à une unité de commande (220), déterminer si le matériel roulant (110) est autorisé à subir une opération de distribution sur la base dudit signal d'identification, et, au moins, si le matériel roulant (110) est autorisé à subir une opération de distribution, déterminer un programme de distribution sur la base de ladite vitesse de matériel roulant, ledit programme de distribution comprenant un échéancier ayant des données sur le moment auquel distribuer l'agent de maintenance à partir de l'unité de distribution et des informations sur la durée pendant laquelle distribuer l'agent de maintenance à partir de l'unité de distribution (230), et
si le matériel roulant (110) est autorisé à subir une opération de distribution, distribuer ledit agent de maintenance sur la base dudit programme de distribution.

12. Procédé selon la revendication 11, comprenant les étapes consistant à mémoriser des informations de précédentes opérations de distribution associées à l'identité du matériel roulant (110), et à déterminer si un matériel roulant (110) est autorisé à subir une opération de distribution sur la base des informations mémorisées de précédentes opérations de distribution pour ledit matériel roulant (110).

13. Procédé selon l'une quelconque des revendications 11 et 12, comprenant l'étape consistant à pomper un agent de maintenance dans une ligne de remise en circulation à la détection d'un matériel roulant (110) et avant la distribution de l'agent de maintenance.

14. Procédé selon l'une quelconque des revendications 11 à 13, comprenant l'étape consistant à distribuer un agent de maintenance sur le matériel roulant (110) se déplaçant sur une voie ferrée de grande ligne.

15. Procédé selon l'une quelconque des revendications 11 à 14, comprenant les étapes consistant à détecter un premier matériel roulant se déplaçant dans une première direction sur la voie ferrée (102) au moyen d'un premier détecteur, générer un premier signal de détection avant que ledit premier matériel roulant n'atteigne l'unité de distribution (230), déterminer la position et la vitesse du premier matériel roulant au moyen d'une première unité de capteur, déterminer le programme de distribution sur la base de la vitesse du premier matériel roulant, distribuer ledit agent de maintenance sur la base du programme de distribution pour le premier matériel roulant, détecter un deuxième matériel roulant se déplaçant dans une deuxième direction sur la voie ferrée (102) opposée à la première direction au moyen d'un deuxième détecteur, générer un deuxième signal de détection avant que ledit deuxième matériel roulant n'atteigne l'unité de distribution, déterminer la position et la vitesse du deuxième matériel roulant au moyen d'une deuxième unité de capteur, déterminer le programme de distribution sur la base de la vitesse du deuxième matériel roulant, et distribuer ledit agent de maintenance sur la base du programme de distribution pour le deuxième matériel roulant.
